# EUROPEAN PATENT APPLICATION

(11) **EP 1 529 589 A1**
(43) Date of publication of application: **11.05.2005**
(21) Application number: 04026142.2
(22) Date of filing: 04.11.2004
(51) Int. Cl.: B23K 9/20, B21D 1/06, B23B 31/06

(54) **Device for weld application of pins to a metal surface, in particular of an automotive body**

(30) Priority: 06.11.2003 IT BO20030657
(71) Applicant: M.W.M. S.r.l., 40069 Zola Predosa (Bologna) (IT)
(72) Inventor: Mongiorgi, Raffaela, 40133 Bologna (IT); Albertini, Roberto, 41100 Modena (IT)
(74) Representative: Dall'Olio, Giancarlo

(57) **Abstract**

The proposed device (1) for weld application of pins (6) to a metallic surface (7) includes an electrode (3), having a shoulder (30) and two extremity portions, a first extremity portion (3a) and a second extremity portion (3b). The first extremity portion (3a) fits removably in a seat (4a) made in a mandrel (4) supported by a gun-like body (5), and the second extremity portion (3b) has a housing (13), which receives, in a removable fit, the stem of a pin (6). A ring (8) engages, by threading, with the mandrel (4) and goes in abutment against the shoulder (30) during disengagement thereof from the mandrel (4).

## Description

The present invention relates to application of pins to a metallic surface, in particular of an automotive body, and more specifically it relates to straightening of a metal surface which has been deformed due to hits and/or collisions, especially the metal surfaces of automotive bodies.

Those skilled in the art know very well such devices for welding application of pins onto deformed metal surfaces. these devices substantially include a gun-like body provided with a mandrel, or a cursor, protruding from the body and featuring a seat, into which the end of an electrode is made to enter freely until a shoulder, made in the electrode, goes in abutment against the mandrel head.

At the other end, the electrode has a seat, which receives, as a loose fit, a suitable pin.

The extension of the introduction of the pin into the seat is limited by the abutment against a screw, which engages with the electrode body and is substantially coaxial therewith.

The abutment point of the screw is adjusted at the electrode opposite end, from which the screw protrudes.

When the electrode shoulder goes in abutment against the mandrel, or cursor, head, it is fastened thereto by a ring, usually having a hexagonal outer profile, which engages with the mandrel outer surface by threading.

The gun includes a resilient element designed to act on the mandrel, to permit suitable adjustment of the pressure exerted on the deformed metal surface to be straightened, as a function of material, diameter and length of the pin to be applied.

The head of the pin carried by the electrode is designed for resting against the deformed metallic surface of the automotive body and, during the welding step, electric discharge, usually obtained by a capacitor bank, passes through the pin, thus causing a predetermined local fusion.

The rapidity of the discharge process (2-3ms) prevents damages to the surfaces on the side opposite to the welding, that usually includes metal plates which are painted, pre-painted, galvanized and plasticized.

The used technology, characterized by an extremely rapid discharge, allows welding of pins with diameters varying in a range from 3 to 8 mm on clean surfaces, that is not treated and not oxidized, of low-carbon steel, galvanized steel, stainless steel, aluminium and brass, specifically in the automotive body manufacturing and the like.

In order to change the size of the pin to be used, and of the electrode, which carries it, it is necessary to act on the ring by a suitable hexagonal key, so as to disengage preliminarily the ring from the mandrel, and then to move the electrode away from the mandrel seat.

The above procedure requires a lot of time and, above all, it requires that a suitable hexagonal key be always available for disengaging the ring from the mandrel.

The object of the present invention is to avoid the above disadvantages by proposing a device for application of pins on a deformed metal surface to be straightened, in particular of an automotive body, which method allows a considerable reduction of the time necessary to change the pins size, without any auxiliary tool, especially such as a hexagonal key.

Another object of the present invention is to propose a particularly versatile and functional device, which ensures high reliability and productivity standards in any operation conditions.

A further object of the present invention is to propose a particularly compact and strong device, of relatively low cost, which ensures extremely rapid and easy operation and maintenance steps.

The above mentioned objects are obtained in accordance with the contents of the claims.

The characteristic features of the invention will be pointed out in the following description of some preferred but not only embodiment, with reference to the enclosed figures, in which:

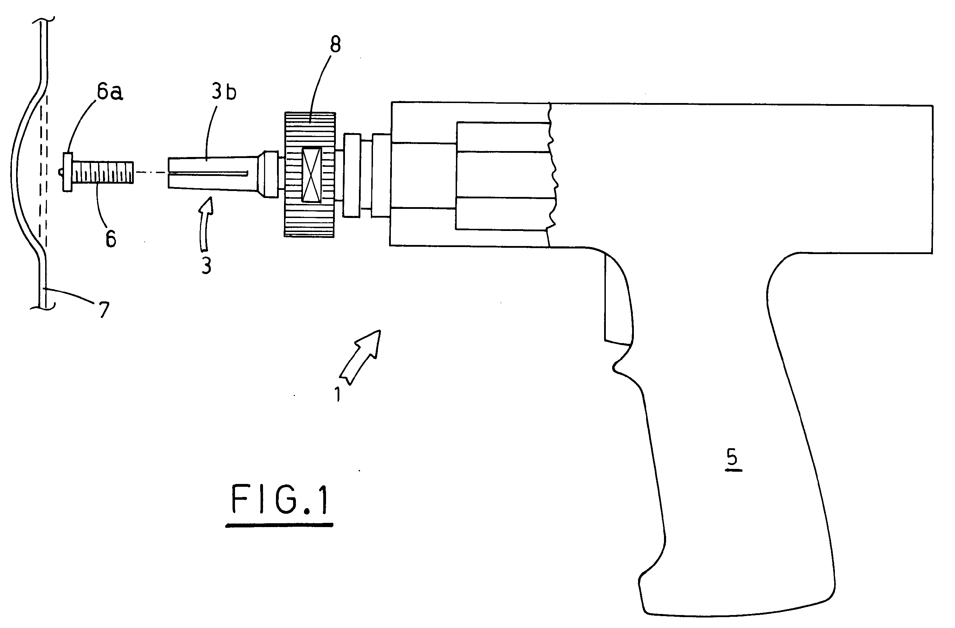

- Figure 1 is a schematic lateral view of a gun-like body equipped with the device proposed by the present invention;
- Figures from 2 to 4 show corresponding schematic lateral views of the proposed device in respective, particularly significant operation steps, concerning the pin size change.

With reference to the above figures, the general reference numeral 1 indicates the proposed device for weld application of pins 6 on a metal surface 7, especially of an automotive body, for example deformed and to be straightened.

Basically, the device 1 proposed by the present invention includes a substantially elongated electrode 3, having a central region, with a shoulder 30, and two extremity portions, first 3a and second 3b.

The first extremity 3a of the electrode 3 is aimed at entering, as a removable loose fit, a seat 4a made in a mandrel 4, or cursor, supported by the gun-like body 5.

The mandrel 4, or cursor, is subjected, in known way, to a resilient member (not shown) which allows suitable adjustment of the pressure exerted on the deformed metallic surface 7, as a function of material and length of the pin 6 to be applied.

According to a preferred embodiment, the first extremity portion 3a of the electrode 3 engages with the seat 4a of the mandrel 4with interference fit, in particular by a conic coupling with substantially mating conical surfaces.

The second extremity portion 3b of the electrode 3 includes, in known way, a housing 13 which receives, as a removable fit, the stem of a pin 6, whose head 6a lies against the deformed metallic surface 7, to be straightened.

The housing 13 includes a plurality of longitudinal notches 13a, usually four, arranged in quadrature, allowing a certain versatility in case of use of pins 6 having a diameter variable within a limited range.

Actually, the possibility to enlarge diametrically the section of the housing 13 inlet allows an adjustment of the electrode 3 to small variations of the pins 6 diameters without requiring its substitution.

According to a known way, at the second extremity portion 3b, the electrode 3 has means 9 for adjusting the introduction extension of the pin 6 into the housing 13, that is the depth of the latter.

The means 9 usually include a screw, which engages with the central portion of the electrode 3, substantially coaxial therewith, and protrudes from the first extremity portion 3a.

The introduction extension of the pin 6 into the housing 13 is adjusted by the definition of the abutment against the screw 9.

Advantageously, the proposed device 1 includes a ring 8, engaging by threading with the outer surface of the mandrel 4, up to a prefixed end stop configuration A of the ring 8.

The ring 8 pushes against the shoulder 30 of the electrode 3 when it is disengaged from the mandrel 4, that is while it is moved away from the end stop configuration A, so as to cause extraction of the first extremity portion 3a from the seat 4a of the mandrel 4, without disengagement of the ring from the mandrel.

In the following, the operation way of the proposed device 1 will be described beginning from preliminary assembly of the pin 6-electrode 3 group.

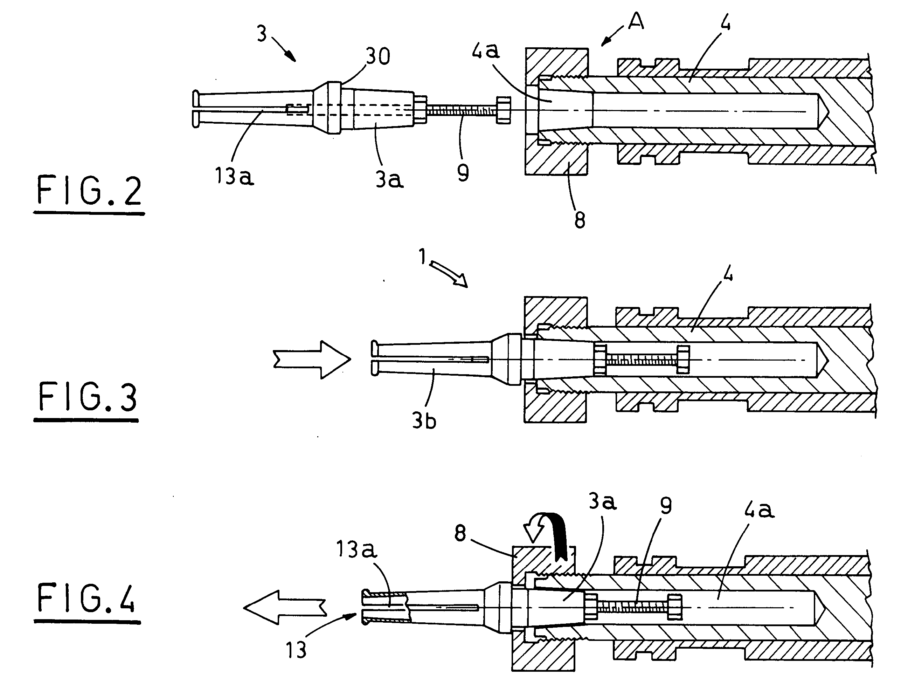

When the stem of the pin 6 has been pressed into the housing 13 up to the abutment against the screw 9, suitably adjusted, the ring 8 is screwed manually to the outer surface of the mandrel 4; without any key and/or tool, until the end stop configuration A is reached (Figure 2).

As soon as the ring 8 is correctly positioned in the end stop configuration A, the first extremity portion 3a of the electrode 3 is introduced into the seat 4a of the mandrel 4, until a stable interference fit is obtained (Figure 3).

In this working configuration, the proposed device 1 is ready to apply, by welding, the pin 6 onto the deformed metal surface 7 to be straightened.

If it is necessary to apply further pins 6, whose material and/or dimension characteristics (diameter and/or length) require a different electrode 3, the latter must be disengaged from the mandrel 4.

In this case, the ring 8 is operated manually, without the use of any key and/or tool, in a way as to be disengaged from the mandrel 4, that is to be moved away from the end stop configuration A (Figure 4).

In the disengaging step, the ring 8 goes in abutment against the shoulder 30 made in the electrode 3, so as to cause the first extremity portion 3a to be come out of the seat 4a.

Advantageously, the step, during which the electrode 3 is removed from the mandrel 4 is performed without disengaging the ring 8 from the mandrel 4.

It results obvious from the above description that the proposed device for applying pins on a deformed metallic surface to be straightened, in particular of an automotive body, allows a drastic reduction of the time related to the pins size changes.

This advantage is obtained by acting manually on the ring without requiring any auxiliary tool, such as in particular a hexagonal key, and without disengaging the ring from the mandrel, or cursor.

The same device, which is extremely compact and strong, is relatively cheap to manufacture, because it includes a limited number of elements, easily accessible on the market.

It is understood that the proposed invention has been described, with reference to the enclosed figures, as a mere, not limiting example. Therefore, it is obvious that any changes or variants applied thereto remain within the protective scope defined by the following claims.

## Claims

1. Device for weld application of pins onto a metal surface, in particular of an automotive body, the device including a substantially elongated electrode (3) including a central portion, having a shoulder (30), and two extremity portions, namely a first extremity portion (3a) and a second extremity portion (3b), with said first extremity portion (3a) removably fitted in a seat (4a) made in a mandrel (4) supported by a gun-like body (5); with said second extremity portion (3b) featuring a housing (13) for receiving, as a removable fit, the stem of a pin (6), whose head (6a) lies against the deformed metal surface (7);
the device being **characterized in that** it includes a ring (8), engaging with the outer surface of said mandrel (4) up to a prefixed end stop configuration (A) and going in abutment against said shoulder (30) when the ring (8) is disengaged from the mandrel (4), that is while the ring is moved away from the end stop configuration (A), so as to cause said first extremity portion (3a) of the electrode (3) to come out from said seat (4a).

2. Device as claimed in claim 1, **characterized in that** said ring (8) engages with the outer surface of said mandrel (4) by a thread coupling.

3. Device, as claimed in claim 1 or 2, **characterized in that** said first extremity portion (3a) of the electrode (3) and said seat (4a) of the mandrel (4) are shaped in such a way, as to allow a mutual interference fit.

4. Device, as claimed in claim 3, **characterized in that** said mutual fit includes mating conical parts.
